# EUROPEAN PATENT APPLICATION

(11) **EP 2 487 619 A2**
(43) Date of publication of application: **15.08.2012**
(21) Application number: 12150299.1
(22) Date of filing: 05.01.2012
(51) Int. Cl.: G06F 21/00

(54) **Information processing apparatus, information processing method and program**

(30) Priority: 10.02.2011 JP 2011027300
(71) Applicant: Sony Corporation, Tokyo 108-0075 (JP)
(72) Inventor: Hayashi, Takamichi, Minato-ku Tokyo 108-0075 (JP); Kuno, Hiroshi, Minato-ku Tokyo 108-0075 (JP); Kato, Motoki, Minato-ku Tokyo 108-0075 (JP); Ueda, Kenjiro, Minato-ku Tokyo 108-0075 (JP); Kobayashi, Yoshiyuki, Minato-ku Tokyo 108-0075 (JP); Yamamoto, Kazuo, Minato-ku Tokyo 108-0075 (JP)
(74) Representative: Jackson, Jonathan Andrew

(57) **Abstract**

An information processing apparatus includes: a data processing unit configured to generate contents to be provided to a client, wherein the data processing unit extracts plural blocks (blocks 1 to i) as content configuration data from an original content, sets patterns 1 to k as plural patterns including block rows of the extracted blocks 1 to i, generates encrypted blocks applying block keys Kb (Px, By) which are different according to respective patterns and respective blocks, in which Px indicates k-pieces of pattern identifiers (P1 to Pk) and By indicates i-pieces of block identifiers (B1 to Bi), selects encrypted blocks 1 to i from the patterns 1 to k at random in each content delivery, generates individually-encrypted portions by encrypting part of configuration data of the selected blocks by applying an individual key (user key Ku) corresponding to a client as a content delivery destination, and generates an encrypted content including encrypted blocks on which encryption processing by the block keys Kb (Px, By) is performed and individually-encrypted portions on which encryption processing by the individual key (user key Ku) is performed as the content to be provided to the client.

## Description

The present disclosure relates to an information processing apparatus, an information processing method and a program. In particular, the present disclosure preferably relates to an information processing apparatus, an information processing method and a program to be used in a system capable of preventing illegal use of contents or tracing a source of illegally-distributed contents.

In recent years, data communication through networks such as Internet has been widely used, and a great deal of image data, music data and so on is extensively distributed through networks.

Copyrights, distribution rights of many contents such as music data and image data are held by preparers or sellers. Therefore, for example, when a service provider provides a user with a content from a server through a network, it is common to exert control to allow only users having the authorized use right to use the content.

Specifically, for example, the control in which a content is transmitted as an encrypted content which can be decrypted only by an encryption key provided to the user who has performed normal content purchase processing is performed. However, even when the above control is performed, illegal use of the unspecified number of contents occurs if a content decrypted by the user who has acquired the encrypted content or the encryption key are distributed or disclosed illegally. Particularly in recent years, illegal disclosure and delivery of data through networks are widely performed and how to prevent illegal actions is a large problem.

A specific example of illegal distribution of an encryption key and a content will be explained with reference to the drawing.

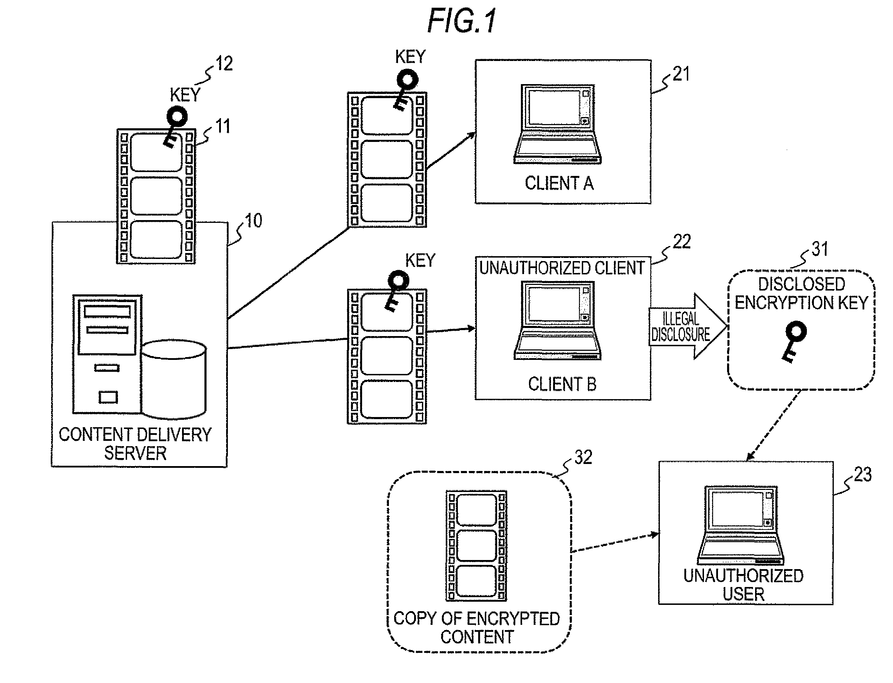

Fig. 1 is a view showing an example of illegal disclosure of the encryption key. A content delivery server 10 provides an encrypted content 11 encrypted by applying an encryption key 12 to a client A21 and a client B22 which have completed a normal content purchase procedure with the encryption key 12.

The client A21 and the client B22 can reproduce the content by decrypting the encrypted content 11 by applying the encryption key 12.

Assume a case where the client B22 commits an act of disclosing the encryption key 12, for example, in a side on a network which can be accessed by anyone by using the encryption key 12.

When the processing of disclosing the key is performed, a disclosed encryption key 31 can be acquired by the unspecified number of users.

As a result, the disclosed encryption key 31 may be acquired through the network, for example, by an unauthorized user 23 who has not completed normal content purchase, and further, a copy 32 of the encrypted content acquired from another client or the like may be decrypted and reproduced by using the disclosed encryption key 31.

If such situation occurs, illegal use of contents will spread widely.

As the same encryption key is provided to all clients in the example of Fig. 1, if the key is leaked by one illegal person, all contents provided to other clients can be decrypted by the illegal key. It is difficult to identify the client which has illegally disclosed the key.

As a method of solving the above problem, a configuration in which an encrypted content to be provided to respective clients is encrypted by different encryption keys is effective.

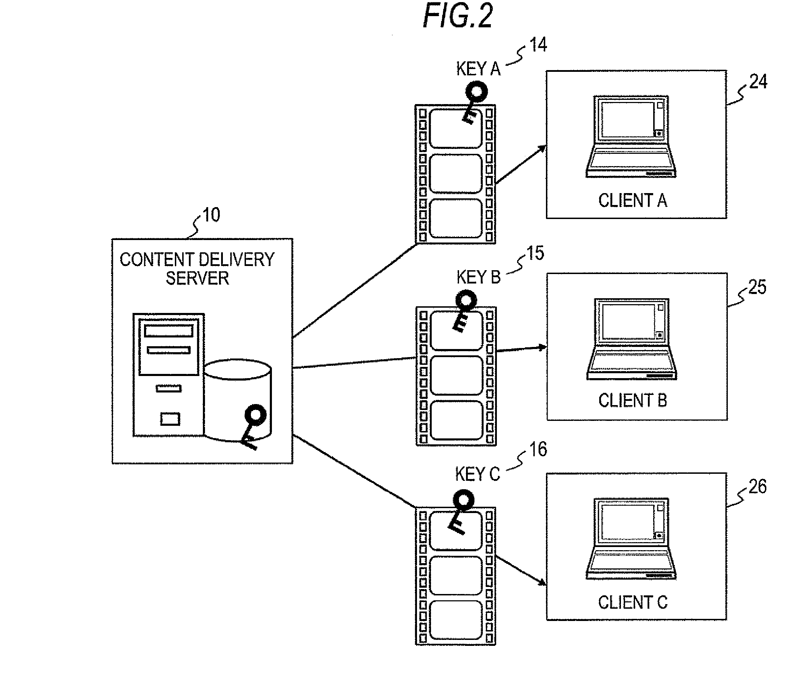

That is, as shown in Fig. 2, the content delivery server 10 provides an encrypted content encrypted by applying an encryption key A14 to a client A24 with the encryption key A14, provides the encrypted content encrypted by applying an encryption key B15 to a client B25 with the encryption key B15 and provides the encrypted content encrypted by applying an encryption key C16 to a client C26 with the encryption key C16.

According to the above setting, if any encryption key is leaked by any chance, the content which can be decrypted by the leaked key is limited to one encrypted content encrypted by the leaked key, and a leakage source, namely, an unauthorized client which has disclosed the encryption key can be identified.

However, it is necessary that the content delivery server 10 generates encrypted contents different according to respective clients for changing the encryption keys for respective clients, which causes a problem that processing load on the server side is increased.

The examples explained with reference to Fig. 1 and Fig. 2 are examples in which illegal disclosure/leakage of the encryption keys applied to encryption/decryption processing of the content is performed. Not only the encryption key but also the decrypted content may be a target for illegal disclosure/leakage.

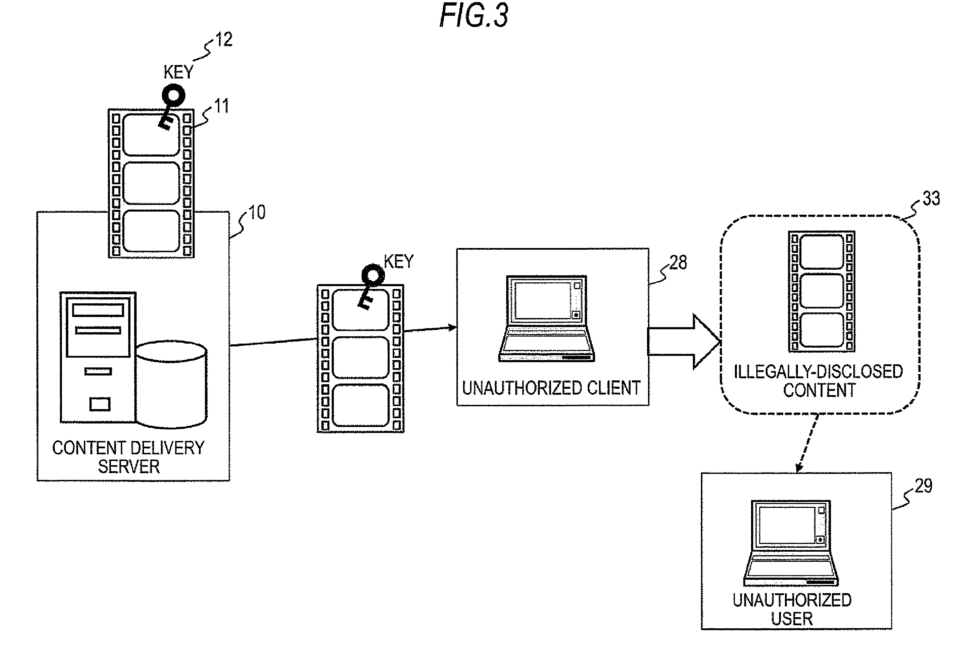

Fig. 3 shows an example of illegal disclosure of the decrypted content.

The content delivery server 10 provides a client 28 with the encrypted content 11 encrypted by applying the encryption key 12. The providing processing is executed as a normal content purchase processing.

However, when the client 28 decrypts the encrypted content 11 by applying the encryption key 12 and discloses the decrypted content 11 illegally, as a result, an illegally-disclosed content 33 becomes in a usable state by the unspecified number of users including an unauthorized user 29 shown in Fig. 3.

If the decrypted content is disclosed, illegal use of decrypted contents will spread widely and it is difficult to identify the client who has disclosed the decrypted content illegally even when the encryption key is changed for each client.

In view of the above, it is desirable to provide an information processing apparatus, an information processing method and a program capable of identifying a disclosure source of a content disclosed illegally.

It is also desirable to provide an information processing apparatus, an information processing method and a program realizing a configuration capable of identifying a disclosure source which has illegally disclosed the content without increasing processing load of a server excessively.

An embodiment of the present disclosure is directed to an information processing apparatus including a data processing unit configured to generate contents to be provided to a client, in which the data processing unit extracts plural blocks (blocks 1 to i) as content configuration data from an original content, sets patterns 1 to k as plural patterns including block rows of the extracted blocks 1 to i, generates encrypted blocks applying block keys Kb (Px, By) which are different according to respective patterns and respective blocks, in which Px indicates k-pieces of pattern identifiers (P1 to Pk) and By indicates i-pieces of block identifiers (B1 to Bi), selects encrypted blocks 1 to i from the patterns 1 to k at random in each content delivery, generates individually-encrypted portions by encrypting part of configuration data of the selected blocks by applying an individual key (user key Ku) corresponding to a client as a content delivery destination, and generates an encrypted content including encrypted blocks on which encryption processing by the block keys Kb (Px, By) is performed and individually-encrypted portions on which encryption processing by the individual key (user key Ku) is performed as the content to be provided to the client.

In the information processing apparatus according to the embodiment of the present disclosure, the data processing unit may perform processing of transmitting the encrypted blocks on which encryption processing by the block keys Kb (Px, By) is performed, the individually-encrypted portions on which encryption processing by the individual key (user key Ku) is performed, and the block keys Kb (Px, By) and the individual key (user key Ku) applied to decryption processing of the encrypted blocks to the client.

Also in the information processing apparatus according to the embodiment of the present disclosure, the data processing unit may generate management information in which client identification information for identifying a client as providing destinations is associated with block arrangement information of contents to be provided and may store the management information in a storage unit.

Also in the information processing apparatus according to the embodiment of the present disclosure, the data processing unit further may generate management information in which the client identification information is associated with encryption key information provided to the client and may store the management information in the storage unit.

Also in the information processing apparatus according to the embodiment of the present disclosure, the data processing unit may execute analyzing processing of block arrangement included in a distributed content to identify the client as the content delivery destination by performing checking processing between the analyzed block arrangement information and registration information of the management information.

Also in the information processing apparatus according to the embodiment of the present disclosure, the data processing unit may identify the client as the delivery destination of the block keys or the individual key by performing checking processing between key information of at least either of the distributed block keys or the individual key and registration information of the management information.

Also in the information processing apparatus according to the embodiment of the present disclosure, the data processing unit may perform setting of the individually-encrypted portions in units of sub-blocks obtained by further dividing the block.

Also in the information processing apparatus according to the embodiment of the present disclosure, the data processing unit may encrypt data outside block areas other than the plural blocks extracted from the original content by applying a common key common to plural clients to which the content is delivered, and may generate data outside block areas on which encryption by the common key is performed as the content provided to the clients.

Also in the information processing apparatus according to the embodiment of the present disclosure, the common key may be a title key Kt corresponding to a title of the content.

Also in the information processing apparatus according to the embodiment of the present disclosure, the data processing unit may generate content configuration information including encryption configuration information of the content as data to be provided to a client.

Another embodiment of the present disclosure is directed to a content delivery system including a content providing unit executing content providing processing with respect to a client and the client receiving contents from the content providing unit, in which contents to be provided to the client includes plural blocks and data outside block areas, a configuration unit A of the content providing unit stores
(1) common-key encrypted data obtained by encrypting data outside block areas by the common key (Kt) and
(2) encrypted block data obtained by encrypting block data by block keys Kb respectively different from one another in the storage unit, and
   a configuration unit B of the content providing unit stores
(3) clear-text data of block data in the storage unit, and
   the configuration unit B of the content providing unit generates the individual key (user key) corresponding to the client, selects block data to be provided to the client, encrypts part of configuration data of the selected blocks by the individual key (user key) corresponding to the client to be provided to the client, and provides the client with data identification information for identifying content configuration data other than encrypted data by the individual key (user key) in accordance with a request of the content from the client, and the configuration unit A of the content providing unit receives the data identification information from the client and provides the client with data specified by the received data identification information.

In the content delivery system according to the embodiment of the present disclosure, the data identification information for identifying the content configuration data may be URL (Uniform Resource Locator).

Still another embodiment of the present disclosure is directed to an information processing apparatus including a data processing unit configured to perform content reproduction processing, in which the data processing unit determines encrypted areas by a common key, encrypted areas by block keys and encrypted areas by an individual key corresponding to a user by referring to content configuration information as encryption configuration information of the content, and performs decryption processing by switching the common key, the block keys and the individual key to execute reproduction of the content.

In the content delivery system according to the embodiment of the present disclosure, the encrypted areas by block keys may include plural block areas respectively encrypted by different block keys, and it is possible that the data processing unit determines by which block keys respective blocks of encrypted areas are encrypted and executes decryption processing by switching block keys by referring to the content configuration information.

Yet another embodiment of the present disclosure is directed to an information processing method executed by an information processing apparatus generating contents to be provided to a client including extracting plural blocks (blocks 1 to i) as content configuration data from an original content, setting patterns 1 to k as plural patterns including block rows of the extracted blocks 1 to i, generating encrypted blocks applying block keys Kb (Px, By) which are different according to respective patterns and respective blocks, in which Px indicates k-pieces of pattern identifiers (P1 to Pk) and By indicates i-pieces of block identifiers (B1 to Bi), selecting encrypted blocks 1 to i from the patterns 1 to k at random in each content delivery, generating individually-encrypted portions by encrypting part of configuration data of selected blocks by applying an individual key (user key Ku) corresponding to a client as a content delivery destination, and generating an encrypted content including encrypted blocks on which encryption processing by the block keys Kb (Px, By) is performed and individually-encrypted portions on which encryption processing by the individual key (user key Ku) is performed as the content to be provided to the client by the information processing apparatus.

Still yet another embodiment of the present disclosure is directed to an information processing method executed by an information processing apparatus performing content reproduction processing including determining encrypted areas by a common key, encrypted areas by block keys and encrypted areas by an individual key corresponding to a user by referring to content configuration information as encryption configuration information of the content, and performing decryption processing by switching the common key, the block keys and the individual key to execute reproduction of the content.

Further another embodiment of the present disclosure is directed to a program allowing an information processing apparatus generating contents to be provided to a client to execute information processing of extracting plural blocks (blocks 1 to i) as content configuration data from an original content, setting patterns 1 to k as plural patterns including block rows of the extracted blocks 1 to i, generating encrypted blocks applying block keys Kb (Px, By) which are different according to respective patterns and respective blocks, in which Px indicates k-pieces of pattern identifiers (P1 to Pk) and By indicates i-pieces of block identifiers (B1 to Bi), selecting encrypted blocks 1 to i from the patterns 1 to k at random in each content delivery, generating individually-encrypted portions by encrypting part of configuration data of selected blocks by applying an individual key (user key Ku) corresponding to a client as a content delivery destination, and generating an encrypted content including encrypted blocks on which encryption processing by the block keys Kb (Px, By) is performed and individually-encrypted portions on which encryption processing by the individual key (user key Ku) is performed as the content to be provided to the client by the information processing apparatus.

Still further another embodiment of the present disclosure is directed to a program allowing an information processing apparatus performing content reproduction processing to execute information processing of determining encrypted areas by a common key, encrypted areas by block keys and encrypted areas by an individual key corresponding to a user by referring to content configuration information as encryption configuration information of the content, and performing decryption processing by switching the common key, the block keys and the individual key to execute reproduction of the content.

The program according to the embodiment of the present disclosure can be provided to, for example, an information processing apparatus and a computer system capable of executing various program codes by storage media and communication media in a computer readable format. When such program is provided in the computer readable format, processing in accordance with the program is realized on the information processing apparatus or the computer system.

Other features and advantages of the present disclosure will be cleared by the detailed description based on a later-described embodiment of the present disclosure and the attached drawings. In the present specification, a system means a logical aggregation of plural apparatuses and it not limited to a configuration in which respective apparatuses are in the same casing.

According to the embodiments of the present disclosure, a configuration in which complete reproduction of a content can be prevented if an encryption key of an encrypted content is leaked.

Specifically, patterns 1 to k in which blocks 1 to i as content configuration data are encrypted by different block keys are set and blocks are selected at random in each content delivery, thereby providing a client with the content having block arrangement (pattern sequence) of different blocks 1 to i. The block arrangements of the content to be provided to a client are registered as management information. If the common key (title key) used as an encryption key for part of the content is leaked, it is difficult to reproduce complete reproduction of the content. It is also possible to identify a client as a source of an illegally-distributed content by acquiring the block arrangement from the illegally-distributed content and checking the arrangement with registration information of management information.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 is a view for explaining an example of illegal use of a content due to illegal disclosure of an encryption key;
Fig. 2 is a view for explaining an example of illegal use of a content due to illegal disclosure of encryption keys;
Fig. 3 is a view for explaining an example of illegal use of a content due to illegal disclosure of an decrypted content;
Fig. 4 is a view for explaining an outline of the present disclosure;
Fig. 5 is a diagram for explaining a specific example of a content provided by a server;
Fig. 6 is a chart for explaining a specific example of a content to be provided by the server;
Fig. 7 shows a diagram for explaining parameters prescribing a configuration of a content to be provided to clients by the server;
Fig. 8 is a chart for explaining a specific example prescribing the configuration of the content to be provided to clients by the server;
Fig. 9 is a diagram for explaining a sequence of content providing processing from a server to a client;
Fig. 10 is a chart for explaining a data configuration example of management information held in a storage unit of the server;
Fig. 11 is a diagram for explaining a configuration example of content providing processing with respect to clients by plural servers;
Fig. 12 is a diagram for explaining a configuration example of data held by a Web server in a configuration in which plural servers performs content providing processing with respect to clients;
Fig. 13 is a diagram for explaining a configuration example of data held by an application server in the configuration in which plural servers perform content providing processing with respect to clients;
Fig. 14 is a diagram for explaining a sequence of content providing processing when performing content providing processing with respect to the client by plural servers;
Fig. 15 is a diagram for explaining an example of content reproduction processing in the client;
Fig. 16 is a flowchart for explaining a sequence of content generation processing executed by a server such as a service provider;
Fig. 17 is a flowchart for explaining the sequence of content providing processing executed by the server such as the service provider;
Fig. 18 is a flowchart for explaining content reproduction processing in the client;
Fig. 19 is a flowchart for explaining a source determination processing sequence executed when an illegally-distributed content is found;
Fig. 20 is a diagram for explaining a hardware configuration example of a server; and
Fig. 21 is a diagram for explaining a hardware configuration example of a client.

Hereinafter, an information processing apparatus, an information processing method and a program according to an embodiment of the present disclosure will be explained with reference to the drawings. The explanation will be made in the following order.
1. Outline of Present Disclosure
2. Specific Example of Content Providing Processing by Server
3. Parameters Prescribing Content Configuration
4. Content Delivery Sequence
5. System Example of Servers Providing Contents
6. Content Reproduction Processing in Client
7. Content Generating and Providing Processing Sequences in Server
   7-1. Content Generating Processing Sequence in Server
   7-2. Content Providing Processing Sequence in Server
8. Content Reproduction Sequence in Client
9. Source Determination Processing Sequence Based on Illegally-Distributed Content in Server
10. Hardware Configuration Example of Respective Apparatuses

### [1. Outline of Present Disclosure]

Hereinafter, the information processing apparatus, the information processing method and the program according to an embodiment of the present disclosure will be explained in detail with reference to the drawings.

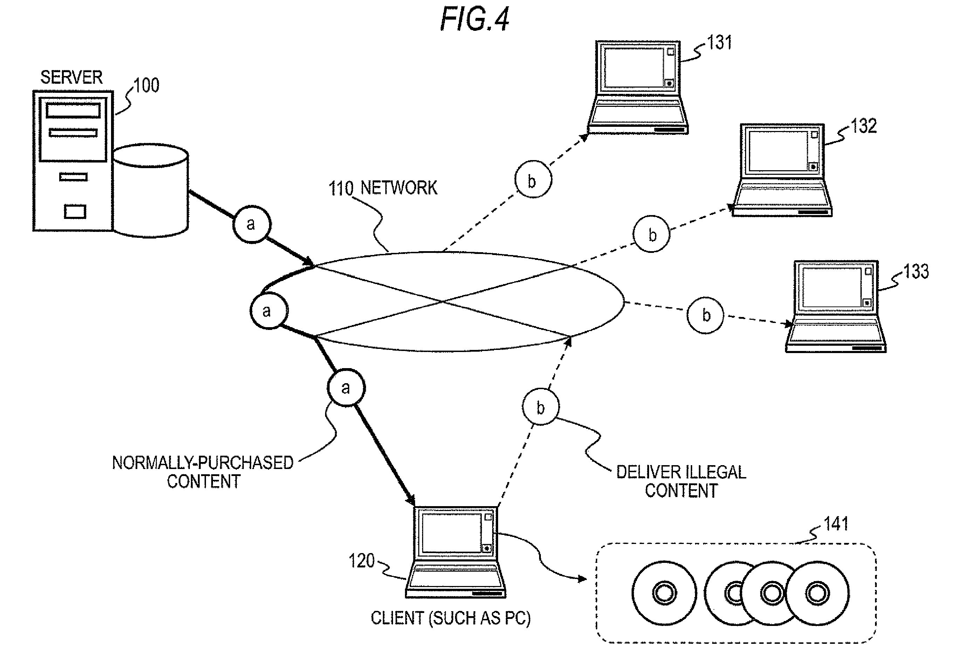

An outline of the present disclosure will be explained with reference to Fig. 4. According to an embodiment of the present disclosure, for example, a disclosure source of illegal contents distributed on networks can be identified.

A server 100 which is administered by a service provider providing contents such as movie and music is shown in Fig. 4.

For example, a client 120 such as a PC accesses the server 100 and performs the normal content purchase procedure to thereby acquire a content. The client 120 acquires an authorized content through a route (a) on a network shown in Fig. 4.

A user of the client 120 is allowed to perform processing of reproducing the normally-purclaased content under fixed use limitations. For example, in the case where a delivered content is an encrypted content, the authorized purchaser can decrypt the encrypted content by using a key for decryption provided from the server to reproduce the content.

However, there is a possibility that the user of the client 120 illegally provides other users (users of clients 131 to 133 shown in the drawing) with the decrypted content through the network. For example, a situation in which the decrypted content is provided to the unspecified number of users through a route (b) on the network shown in Fig. 4 can occur. For example, there is a possibility that processing of putting the decrypted content in a site on the network accessible by the unspecified number of users is performed.

There is also a case where the user of the client 120 creates a large amount of illegally-copied recording media by illegally recording the decrypted content into media such as discs and provides the media to other users. The media are, for example, discs 141 shown in Fig. 4.

According to an embodiment of the present disclosure, it is possible to identify a source of an illegal content when such illegal distribution of the content is exposed. In the case shown in Fig. 4, the source is the client 120. It is also possible to realize the above configuration without increasing processing load of the server 100 excessively.

### [2. Specific Example of Content Providing Processing by Server]

As described above, according to an embodiment of the present disclosure, the source of the illegal content can be traced. The server 100 providing authorized contents generates contents having a peculiar configuration to be provided to clients.

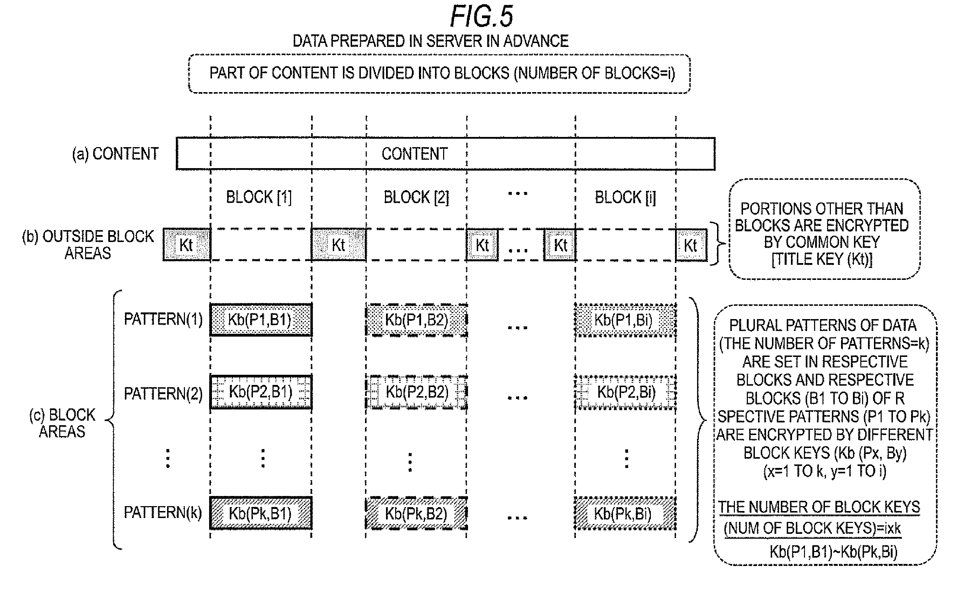

A configuration of a content to be provided to a client (user device) by a server (content delivery server and so on) administered by, for example, a service provider and so on will be explained with reference to Fig. 5 and subsequent drawings. The server creates a peculiar content for enabling identification of the client or the user who has illegally disclosed or distributed the content, providing the peculiar content to respective clients.

Fig. 5 is a diagram for explaining data to be prepared by the server in advance.

In Fig. 5,
(a) content,
(b) data outside block areas, and
(c) data in block areas are shown.

The server extracts plural pieces of partial data included in the content as blocks. In this case, when the number of blocks is i, i-pieces of blocks are extracted.

Data areas other than the blocks extracted from the content are data outside block areas shown in (b) of Fig. 5.

The data outside block areas (b) is encrypted by applying one encryption key (title key (Kt)). The title key is one encryption key, for example, set to a title of the content.

Concerning i-pieces of blocks extracted from the content, encrypted data as shown in (c) of Fig. 5 is generated.

First, k-block rows each having i-pieces of blocks extracted from the content are prepared. These block rows are patterns 1 (P1) to k (Pk).

Next, respective blocks included in respective patterns are individually encrypted by applying different block keys.

For example, a block key applied for encryption of a block (B1) of the pattern 1 (P1) is represented as Kb (P1, B1).

As shown in Fig. 5, i-pieces of blocks included in the pattern 1 (P1) is set as an aggregate of encrypted blocks encrypted by different block keys which are block keys Kb (P1, B1) to Kb (P1, Bi).

Also, i-pieces of blocks included in the pattern 2 (P2) is set as an aggregate of encrypted blocks encrypted by different block keys which are block keys Kb (P2, B1) to Kb (P2, Bi).

K-patterns of the above patterns are generated.

The number of blocks included in each of patterns 1 to k is i, therefore, the block keys applied for generating k-patterns will be as follows.
Pattern 1: Kb (Pk, B1) to Kb (P1, Bi)
Pattern 2: Kb (P2, B1) to Kb (P2, Bi)
Pattern k: Kb (Pk, B1) to Kb (Pk, Bi)

That is, the total number of block keys for generating k-patterns is ixk block keys which are Kb (P1, B1) to Kb (Pk, Bi).

As described above, first, the server generates
(b) data outside block areas encrypted by the title key (Kt) and
(c) k-patterns encrypted by individual block keys of respective blocks based on (a) the content.

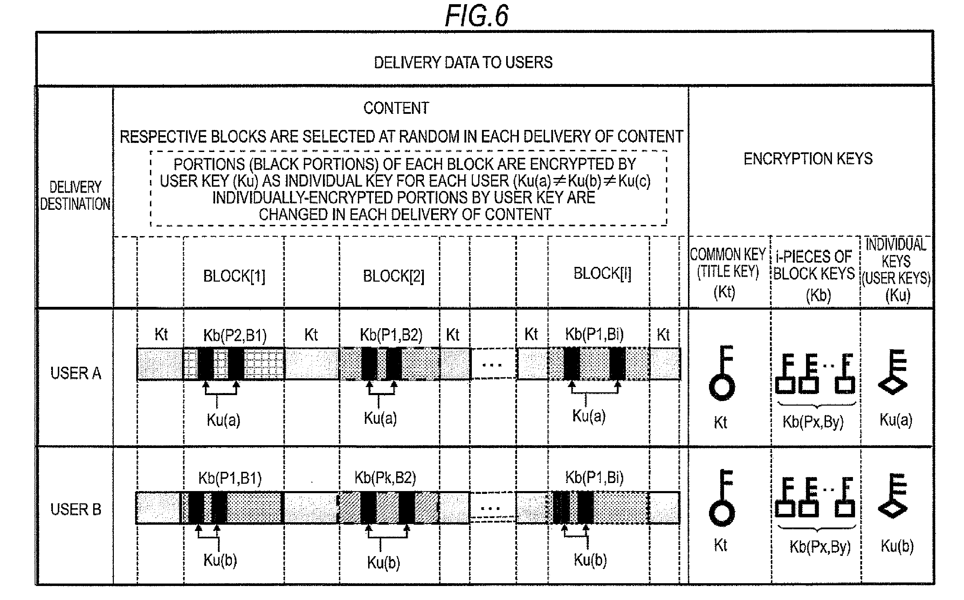

Subsequently, delivery data to the clients (user devices) will be explained with reference to Fig. 6.

The server generates data to be provided to respective clients by using
(b) data outside block areas encrypted by the title key (Kt) and
(c) k-patterns encrypted by individual block keys of respective blocks, which are shown in Fig. 5.

The server selects blocks at random from k-patterns of patterns 1 to k shown in (c) of Fig. 5 as processing performed in each delivery of the content.

That is, the encrypted blocks of blocks 1 to i encrypted by individual block keys Kb are selected from the patterns 1 to k one by one in each delivery processing of the content.

The blocks 1 to i are selected one by one from the encrypted blocks encrypted by individual block keys Kb (Ps, Py) shown in (c) of Fig. 5, and data outside block areas encrypted by the title key (Kt) shown in (b) of Fig. 5 is combined with the selected blocks to set a content data row to be provided to a certain client.

Furthermore, part of the blocks included in the generated content data row is encrypted by applying an individual key (user key) Ku corresponding to each user (client).

According to the processing, the content to be provided to the user is generated.

Concerning an area encrypted by the individual key (user key) Ku corresponding to each user which is set in the block, it is possible that data encrypted by the block key Kb is doubly encrypted by applying the individual key (user key) Ku corresponding to the user, or it is also possible that the area is set as an encrypted area encrypted only by the individual key (user key) Ku corresponding to each user, not performing encryption by the block key Kb to the area, or after decrypting the data encrypted by the block key Kb.

Fig. 6 shows a configuration example of the following data.
a content provided to a user A
a content provided to a user B

For example, the content provided to the user A shown in Fig. 6 includes data outside block areas encrypted by the title key (kt) shown in (b) of Fig. 5 and
blocks 1 to i selected by random selection of blocks from k-patterns of patterns 1 to k shown in (c) of Fig. 5.

Furthermore, partial areas of blocks are encrypted by the user key Ku individualized to each user which is generated corresponding to the user A.

For example, a block 1 selected as a content to be delivered to the user A shown in the drawing is a block encrypted by the block key Kb (P2, B1), namely, the block 1 in the pattern 2 shown in (c) of Fig. 5.

Partial areas of the block encrypted by the block key Kb (P2, B1) are encrypted by applying a user key Ku(a) which is a key unique to the user corresponding to the user A.

Portions filled with black shown in the drawing are encrypted portions (individually-encrypted portions) by the user key Ku(a).

The encrypted areas (individually-encrypted portions) by the user key are set in all blocks of blocks 1 to i.

It is also preferable to apply a configuration where encrypted areas (individually-encrypted portions) by the user key are set with respect to part of blocks. It is further preferable to apply a configuration where encrypted areas (individually-encrypted portions) by plural user keys are set in one block.

The block 1 selected as the content to be delivered to a user B shown in the drawing is a block encrypted by the block key Kb (P1, B1), namely, the block 1 in the pattern 1 shown in (c) of Fig. 5.

Partial areas of the block encrypted by the block key Kb (P1, B1) are encrypted by applying a user key Ku(b) which is a key unique to the user corresponding to the user B.

Portion filled with black shown in the drawing are encrypted portions by the user key Ku(b).

The encrypted areas by the user key can be changed as well as can be the same areas with respect to each delivery processing.

It is preferable that the encrypted areas by the user key include important data and important scene areas of the content. For example, the encrypted areas are preferably set to areas including I-picture in MPEG data.

The user key is generated by, for example, random number generation processing when the server delivers the content, and the generated key is provided to the user as well as stored in a database.

Data to be provided to the user includes a set of encryption keys applied to decryption of the encrypted content, in addition to the encrypted content.

For example, encryption keys to be provided with respect to the user A are a set of keys as follows:
(a) the title key as a common key common to all users
(b) i-pieces of block keys applied to decryption of i-pieces of blocks in the content to be provided to the user A and
(c) the user key Ku(a) as an individual key corresponding to the user A.

Encryption keys to be provided to the user B are a set of keys as follows:
(a) the title key as a common key common to all users
(b) i-pieces of block keys applied to decryption of i-pieces of blocks in the content to be provided to the user B and
(c) the user key Ku(b) as an individual key corresponding to the user B.

Concerning the title key Kt in (a), the same title key is provided to all users when the title is common.

I-pieces of block keys Kb in (b) make different pairs according to blocks selected as the content to be provided to respective users.

The user key Ku in (c) differs according to users.

The server generates the delivery content and the set of keys with respect to respective users and provides them to respective users.

### [3. Parameters Prescribing Content Configuration]

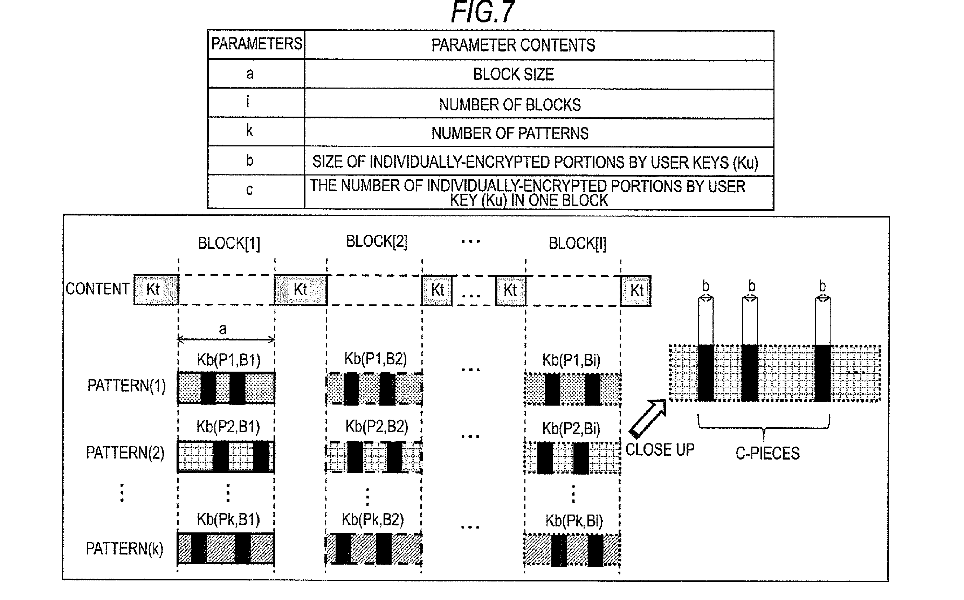

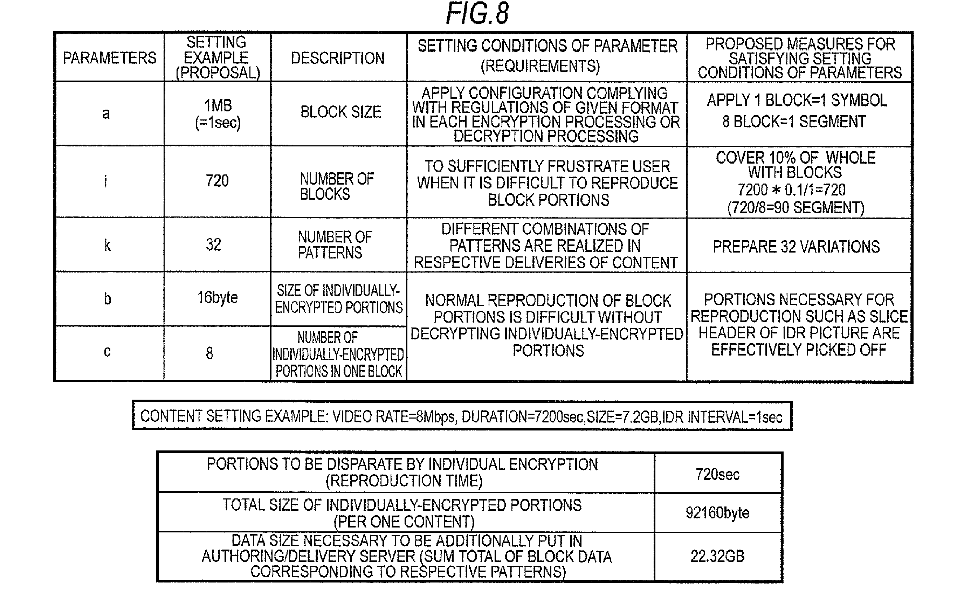

Next, an example of setting parameters prescribing the configuration of the content to be delivered to users will be explained with reference to Fig. 7 and Fig. 8.

As shown in Fig. 7, for example, there are parameters below as parameters proscribing the content to be delivered.
a: Block size
i: The number of blocks
k: The number of patterns
b: Size of individually-encrypted portions by the user key (Ku)
c: The number of individually-encrypted portions by the user key (Ku) in one block

A specific example of setting these parameters will be shown in Fig. 8. Fig. 8 shows an example of setting parameters in the case where the content has the following conditions.
Video rate=8Mbps
Duration=7200sec
Size=7.2GB
IDR interval= 1 sec

### (a: Block size)

The block size is set to, for example, 1MB.

A setting condition of the block size is to comply with regulations of a given format in each encryption processing or decryption processing.

To satisfy the setting condition, for example, 1Block=1 Symbol and 8Block=1 Segment are set.

### (i=the number of blocks)

The number of blocks is set to, for example, 720 blocks per one content.

It is necessary that the number of blocks is set so as to sufficiently frustrate the user when it is difficult to reproduce the block portions.

In order to satisfy the above, blocks of approximately 10% of the whole content (7200*0.1=720sec)(720/8=90Segment) are set.

### (k=the number of patterns)

The number of patterns k is set to, for example, 32.

It is preferable that different combinations of patterns are realized in respective deliveries of the content.

When the number of patterns k is 32 and the number of blocks is i, 32ⁱ types of different combinations of blocks are realized.

### (b: Size of individually-encrypted portions by user keys (Ku)

The size of individuahy-encrypted portions by user keys is set to, for example, 16Byte.

### (c: The number of individually-encrypted portions by the user key (Ku) in one block)

The number of individually-encrypted portions by the user key (Ku) in one block is set to, for example, 8.

It is necessary that these parameters b and c are set in a level where it is difficult to view the content normally without decrypting individually-encrypted portions by the user key Ku, for example, in the case where the normally delivered content is distributed illegally after the delivery, therefore, it is preferable that these parameters are determined according to contents.

For example, when the parameters are set as shown in Fig. 8,
a portion of the content which is not reproduced without the individual key (user key) corresponding to each user (reproduction time) is 720 seconds,
the total size of encrypted portions by the individual key (user key) corresponding to each user is 92160 byte per one content, and
the total size of blocks corresponding to k-pieces of patterns is 22.3GB.

It is also preferable that the optimum parameters are appropriately set in accordance with conditions of the content to be delivered.

### [4. Content Delivery Sequence]

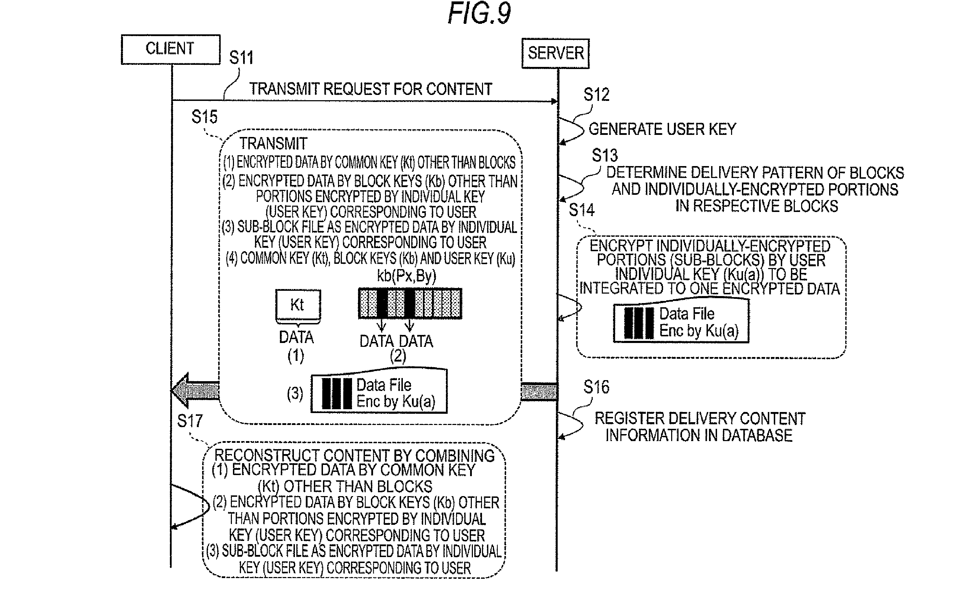

Next, an example of a content delivery sequence will be explained with reference to a sequence diagram shown in Fig. 9.

Fig. 9 is a diagram showing a content delivery sequence between a server and a client.

The client is an information processing apparatus such as a PC and a communication terminal possessed by the user.

Though settlement processing, authorization processing between the server and the client etc. included in content providing processing are omitted in the present sequence, these settlement processing and authorization processing are executed according to need.

First, the client requests the server to deliver a content in Step S11. For example, the client transmits content designation information to the server, which designates a specific content from a content list provided by the server.

In Step S12, the server generates a user key Ku as an individual key corresponding to the user (client) in accordance with the request of the content. For example, the server generates the user key Ku by, for example, random number generation.

Next, in Step S13, the server executes selection processing of blocks to be set in the content provided to the client, and further determines individually-encrypted portions by the individual key (user key) corresponding to the user in each of respective selected blocks.

The selection processing of blocks in Step S13 is performed by the processing of selecting blocks 1 to i from the patterns 1 to k one by one at random shown in (c) of Fig. 5 explained with reference to Fig. 5.

The processing of determining individually-encrypted portions by the user key in the selected blocks is executed in accordance with, for example, parameters explained with reference to Fig. 8 so that the portions include important scenes and data areas in respective blocks.

Next, in Step S14, the server performs encryption processing on individually-encrypted portions determined in Step S13 by applying the individual key (user key Ku) corresponding to the client. Furthermore, the server integrates individually-encrypted portions in respective blocks on which encryption by the user key Ku is performed to be set as one data file (sub-block file).

Each block is set as an aggregate of sub-blocks as encryption processing units, and portions of encrypted data by the encryption key (user key) corresponding to the user are also executed on a sub-block basis.

Next, the server performs data delivery to the client in Step S15. The delivery data will be a set of the following data, for example, as shown in Fig. 9 (S15)
(1) Encrypted data by the common key (Kt) other than blocks
(2) Encrypted data of block keys (Kb) other than portions encrypted by individual key (user key) corresponding to the user
(3) the sub-block file including encrypted data by the individual key (user key) corresponding to the user, and
(4) the common key (Kt), the block keys (Kb) and the user key (Ku).

The above encrypted content data and the set of keys are transmitted to the client.

The server provides the client with content configuration information in which area information of block areas and individually-encrypted portions is recorded in addition to the above data.

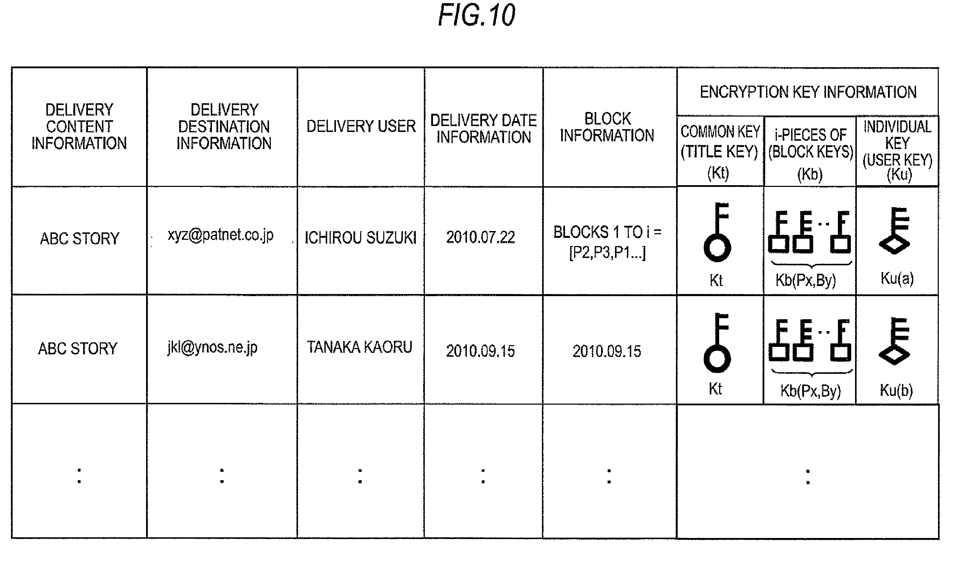

Next, the server registers management information as delivery content information in the database in Step S16. For example, the server performs registration processing of management information shown in Fig. 10. The management data will be explained later.

When the client receiving the encrypted content and the set of keys from the server, the client reconstructs a series of content by combining the following received data in Step S17:
(1) Encrypted data by the common key (Kt) other than blocks
(2) Encrypted data of block keys (Kb) other than portions encrypted by individual key (user key) corresponding to the user
(3) the sub-block file including encrypted data by the individual key (user key) corresponding to the user
   The client stores the content in a storage unit in the client with the key data received from the server, that is,
(4) the common key (Kt), the block keys (Kb) and the user key (Ku). Furthermore, the client reproduces the content by executing decryption processing using respective encryption keys.

At the time of performing decryption of the content, decryption processing in which the encryption key is switched by referring to content configuration information provided by the server, namely, content configuration information in which area information of block areas and individually-encrypted portions are recorded.

Data to be recorded by the server as management information of the delivery content will be explained with reference to Fig. 10.

Fig. 10 is a data configuration example of management information held in a storage unit of the server.

As shown in Fig. 10, the management information includes, for example,
delivery content information,
delivery destination information,
delivery user information,
delivery date information,
block information and
encryption key information (the common key, the block key and the individual key corresponding to the user (user key)).

The delivery content information includes information of content titles, IDs of contents.

The delivery destination information is information such as addresses of content destinations, for example, addresses and so on corresponding to clients or users.

The delivery user information is user information such as user's names, user's addresses and contact points thereof.

The delivery date information is information of delivery dates of the content.

The block information is information concerning blocks 1 to i included in the delivery content. The information can identify from which patterns respective block have been selected.

The encryption key information records information of encryption keys applied for encryption processing of each provided content. Specifically, the information concerns the following the set of keys:
(a) the title key common to all users: Kt
(b) i-pieoes of block keys applied to decryption of i-pieces of blocks in the provided content with respect to the user: Kb, and
(c) User key as the individual key corresponding to the user: Ku.

The above information of keys is recorded so as to be associated with delivery destination information of the content as management information.

For example, when the delivery content is illegally distributed, the combination of blocks included in the distributed content is analyzed and registration information of management information shown in Fig. 10 is used, thereby identifying the delivery-destination client of illegally-distributed content.

Additionally, for example, when leakage of the key occurs, it is possible to determine which client is a source of the key leakage by analyzing the leaked key and checking the key with the management information shown in Fig. 10.

The example of management information shown in Fig. 10 is an example, and it is not always necessary to record all of the information. Information other than the above information can be stored as management information.

### [5. System Example of Servers Providing Contents]

In the above embodiment, the example in which all data delivery with respect to clients is executed by one server has been explained.

Hereinafter, as a configuration example in consideration of data delivery efficiency, a processing example in which plural servers performing content providing processing with respect to clients are set and respective servers provide clients with part of content configuration data will be explained.

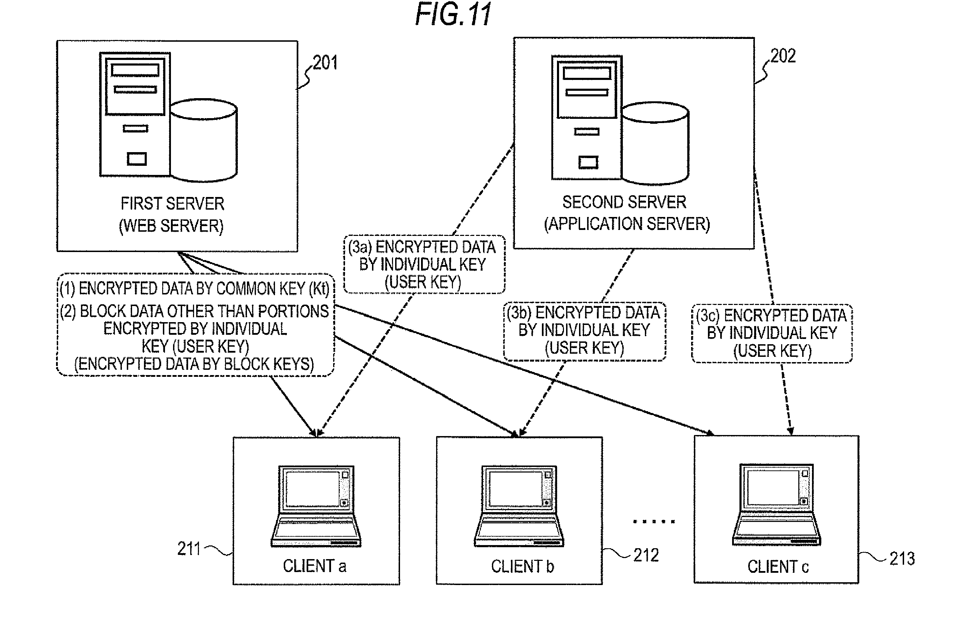

Fig. 11 shows two servers (a first server 201, a second server 202) executing content providing processing and plural clients (clients a211 to n213) receiving contents.

As shown in Fig. 11, the first server (Web server) 201 transmits the following data to respective clients 211 to 213.
(1) Encrypted data by the common key (Kt)
(2) Block data (encrypted data by block keys) other than portions encrypted by the individual key (user key)
   On the other hand, the second server (application server) 202 transmits the following data to respective clients 211 to 213.
(3) Encrypted data by individual keys (user keys Ku) corresponding to the user

As described above, the first server (Web server) 201 and the second server (application server) 202 perform data transmission processing by taking charge of parts of the delivery content with respect to clients as transmission contents respectively.

The processing of generating the individual key corresponding to the user (user key) and encryption processing applying the individual key (user key) are executed by the second server (application server) 202 as the processing of each content delivery.

The first server (Web server) 201 does not execute processing of data encryption newly in each content delivery processing, and executes selective extraction of data stored in the database in advance, then, provides the clients with the selected data. That is, the first server 202 provides the clients with the following data in each delivery processing.
(1) Encrypted data by the common key (Kt)
(2) Block data (encrypted data by block keys) other than portions encrypted by the individual key (user key)

When applying the above configuration of using two servers, load sharing in the content delivery processing can be performed and efficient content delivery can be realized.

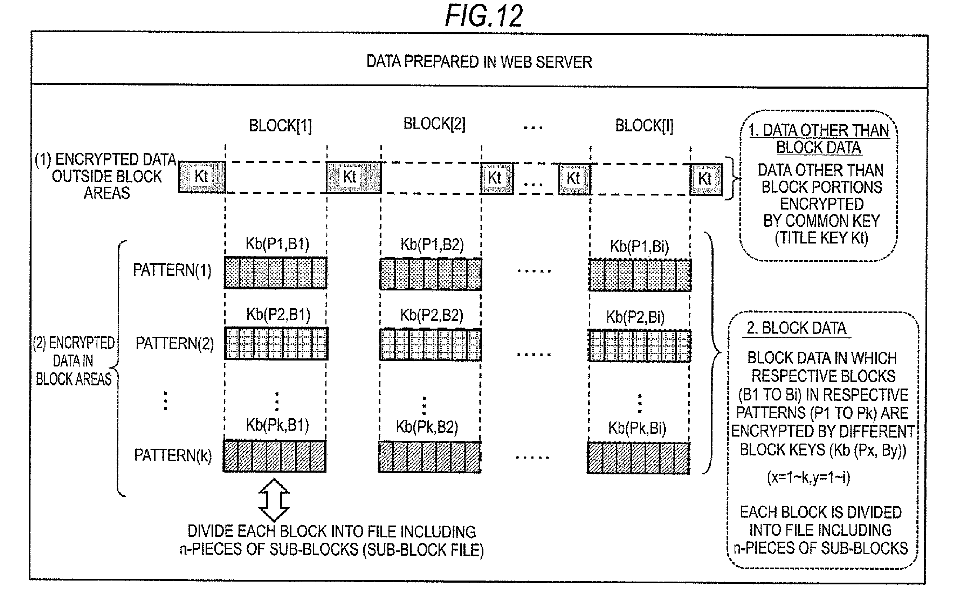

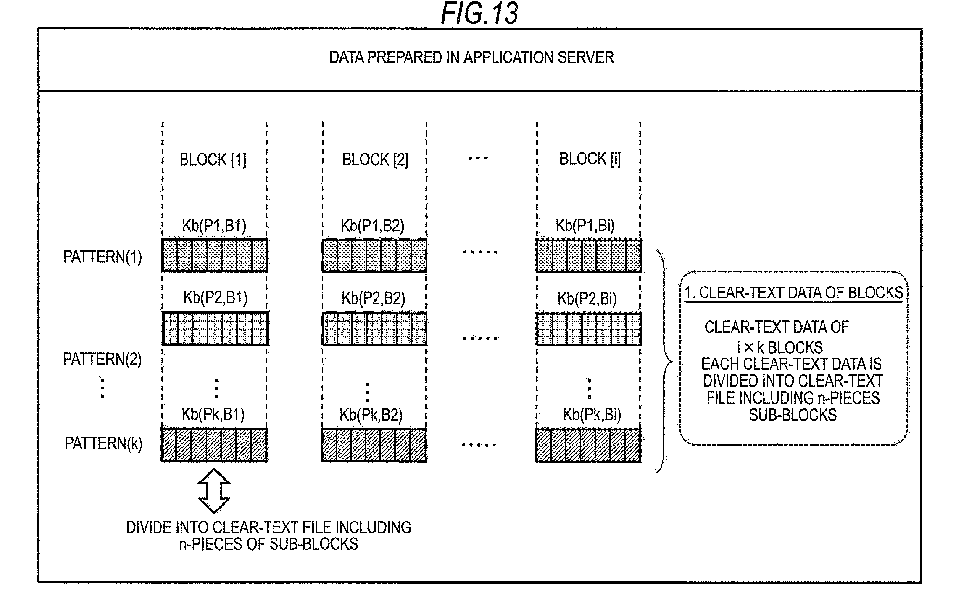

Examples of the following data will be explained with reference to Fig. 12 and Fig. 13.
Data held by the first server (Wave server) 201
Data held by the second (application server) 202

First, data held by the first server (Web server) 201 will be explained with reference to Fig. 12.

As explained with reference to Fig. 11, the first server (Web server) 201 provides the clients with the following data.
(1) Encrypted data by the common key (Kt)
(2) Block data (encrypted data by block keys) other than portions encrypted by the individual key (user key) corresponding to the user

The above data is data which can be prepared in advance. Concerning the block data (encrypted data by block keys) other than portions encrypted by the individual key (user key) corresponding to the user shown in (2), it is necessary to determine blocks selected with respect to each user and portions to be encrypted by the individual key (user key) corresponding to the user at the time of delivering the content, however, encrypted data by block keys itself can be prepared in advance before determining the client as the content delivery destination and can be stored in the database.

As shown in Fig. 12, the first server (Web server) 201 may hold the following data in the database.
(1) Encrypted data outside block areas (encrypted data by the common key (title key Kt) and
(2) Encrypted data in block areas (encrypted data by the block keys Kb)

These data corresponds to data of (b) and (c) explained with reference to Fig. 5.

The first server (Web server) 201 may hold these data in the storage unit.

The common key (title key Kt) and the block keys (Kb) are held as key data.

Concerning (2) encrypted data in block areas (encrypted data by the block keys Kb), encryption by the block keys Kb is executed on a sub-block basis prescribed as a unit of encryption processing.

As shown in Fig. 12, block data held by the first server (Web server) 201 can be identified on a sub-block basis as the unit of encryption processing. In the example shown in Fig. 12, one block includes n-pieces of sub-blocks.

Encryption by the individual key (user key) corresponding to the user is also performed on a sub-block basis.

The encryption by the individual key (user key) corresponding to the user is executed in the second server (application server) 202 and provided to the clients.

Therefore, the first server (Web server) 201 provides the clients with block data only including sub-blocks other than a sub-block area where encryption by the individual key (user key) corresponding to the user is performed.

Data provided to the clients by the first server (Web server) 201 is the following data.

### (1) Encrypted data outside block areas

This is data in which data areas other than blocks are encrypted by applying the common key (title key: Kt) set with respect to the content title.

### (2) Encrypted data in block areas

This is encrypted block data encrypted by applying different block keys Kb with respect to respective blocks 1 to i corresponding to the k-pieces of patterns of patterns 1 to k as explained with reference to (c) of Fig. 5, which is data only including sub-blocks other than the sub-block area where encryption by the individual key (user key) corresponding to the user is performed.

On the other hand, data held by the second server (application server) 202 is data shown in Fig.13.

That is, the second server holds clear-text data of block data corresponding to respective patterns (patterns 1 to k) on which encryption is not performed.

Block data held by the second server (application data) 202 can be also identified on a sub-block basis as the unit of encryption processing as shown in Fig. 13. In the example shown in Fig. 13, one block includes n-pieces of sub-blocks.

The present processing example will be explained as a processing example in which individually-encrypted portions by the individual key (user key Ku) to be set in the block are configured as encrypted data not encrypted by the block key Kb but encrypted only by the individual key (user key) Ku corresponding to the user. It is also possible to set the individually-encrypted portions as doubly-encrypted portions by the block keys Kb and the individual key Ku, not limited to the above state.

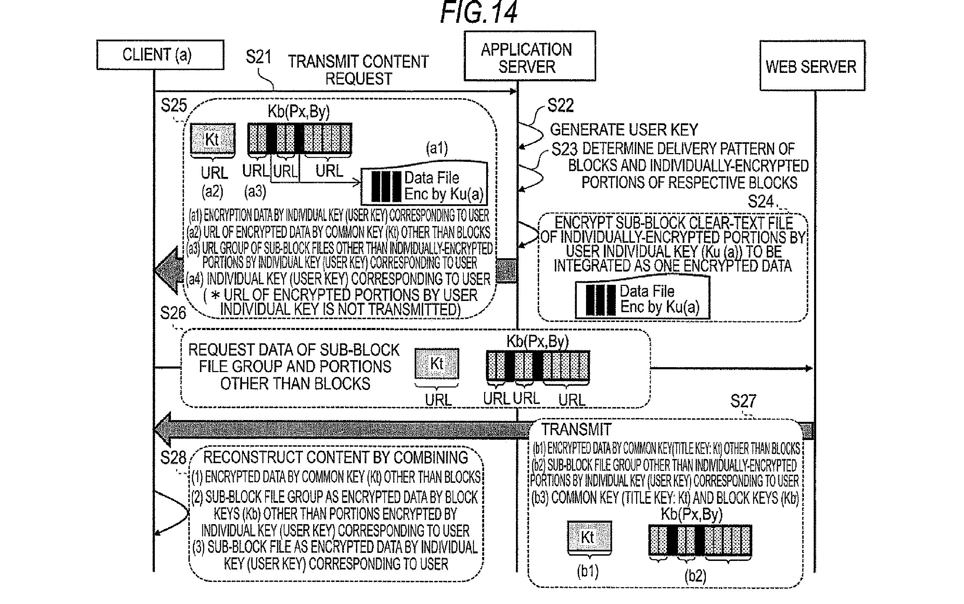

A sequence of providing a content using two servers which are the first server (Web server) 201 and the second server (application server) 202 will be explained with reference to Fig. 14.

A client is an information processing apparatus such as a PC and a communication terminal possessed by the user in the same manner as the sequence explained above with reference to Fig. 9. Though settlement processing, authorization processing between the server and the client etc. included in content providing processing are omitted in the present sequence, these settlement processing and authorization processing are executed according to need.

First, the client requests the application server to deliver a content in Step S21. For example, the client transmits content designation information to the server, which designates a specific content from a content list provided by the application server.

In Step S22, the application server generates a user key Ku as an individual key corresponding to the user (client) in accordance with the request of the content. For example, the application server generates the user key Ku by, for example, random number generation.

Next, in Step S23, the application server executes selection processing of blocks to be set in the content provided to the client, and further determines individually-encrypted portions by the individual key (user key) corresponding to the user in each of respective selected blocks.

The selection processing of blocks in Step S23 corresponds to the processing of selecting blocks 1 to i from the patterns 1 to k one by one at random shown in (c) of Fig. 5 explained with reference to Fig. 5.

The application server has only clear-text data corresponding to blocks as explained with reference to Fig. 13 and does not have data encrypted by the block keys Kb.

Therefore, the application server just determines a pattern sequence corresponding to blocks to be provided to the client in Step S23.

For example, the application server determines a pattern sequence (2, 1, k, ..., 5) indicating from which pattern blocks 1 to i are selected as shown below.
Block 1: Pattern 2
Block 2: Pattern 1
Block 3: Pattern k
Block i: Pattern 5

Then, the application server determines portions (individually-encrypted portions) encrypted by the individual key (user key: Ku) in respective blocks with respect to blocks corresponding to the determined pattern sequence in Step S23.

The processing of determining individually-encrypted portions in the selected blocks is made so as to include important scenes and data areas, for example, in respective blocks in accordance with parameters explained with reference to Fig. 8.

The individually-encrypted portions are determined on a sub-block basis.

Next, in Step S24, the application server executes encryption with respect to data portions to be encrypted by the user key selected from respective blocks, namely, sub-blocks selected as the individually-encrypted portions by applying the individual key (user key: Ku) generated in Step S22.

As explained with reference to Fig. 13 as the above, the application server holds block data as clear-text data. The clear-text block data is divided on a sub-block basis and the application server encrypts the sub-blocks (clear text) selected as individually-encrypted portions by applying the individual key (user key: Ku) generated in Step S22.

Furthermore, the application server integrates individually-encrypted sub-block data on which encryption by the individual key (user key: Ku) is performed to be set as one data file (sub-block file).

Next, in Step S25, the application server transmits the individually-encrypted sub-block data file (sub-block file) generated in Step S24 to the client.

Furthermore, the application server transmits to the client identification information of data (for example, URL (Uniform Resource Locator) corresponding to data, address information and so on) to be provided from the Web server to the client.

Data to be provided from the Web server to the client is as follows.
(1) Encrypted data by the common key (Kt) other than blocks, and
(2) Encrypted data by block keys (Kb) other than encrypted portions by the individual key (user key) corresponding to the user

The application server transmits identification information of the above data (for example, URL, address information and so on corresponding to data) to the client with the individually-encrypted sub-block data file (sub-block file).

The delivery data to be provided from the application server to the client includes the following data, for example, as shown in Fig. 14 (S25).
(a1) Encrypted data by the individual key (user key) corresponding to the user
(a2) Identification information of encrypted data by the common key (Kt) other than block areas (for example, URL, address information and so on corresponding to data)
(a3) Identification information of sub-blocks other than individually-encrypted portions by the individual key (user key) corresponding to the user (for example, URL, address information and so on corresponding to sub-block data)
(a4) Individual key (user key) corresponding to the user

The above encrypted data, data identification information and the set of keys are transmitted to the client.

The application server provides the client with content configuration information in which area information of block areas and individually-encrypted portions is recorded.

The processing in the next Step S26 is processing on the side of the client.

The client receives respective data of the above (a1) to (a4) from the application server and requests content configuration data other than the content received from the application server by using data of the (a2) and (a3) included in the received data with respect to the Web server.

That is, the client accesses the Web server by using the following data identification information (for example, URL) to request the acquisition of data corresponding to the data identification information.
(a2) Identification information of encrypted data by the common key (Kt) other than block areas (for example, URL, address information and so on corresponding to data)
(a3) Identification information of sub-blocks other than individually-encrypted portions by the individual key (user key) corresponding to the user (for example, URL, address information and so on corresponding to sub-block data)

The Web server provides the client with data requested by the client in Step S27.

Data provided to the client by the Web server includes the following data as shown in Fig. 14 (S27).
(b1) Encrypted data by the common key (title key: Kt) other than blocks
(b2) Sub-block data other than individually-encrypted portions by the individual key (user key) corresponding to the user in block data selected with respect to the client
(b3) Common key (title key: Kt) and block keys (Kb)

Respective data of (b1) and (b2) in the above data is specified by data identification information such as URL corresponding to respective data received from the client.

The common key (Kt) of (b3) is specified according to the title corresponding to the content, which is specified by data included in data identification information such as URL received from the client.

Similarly, concerning the block keys (Kb) of (b3), the block keys corresponding to blocks specified by block identifiers analyzed from identification information of sub-block data of (b2) in the above data is selected to be provided to the client.

The client receiving the above encrypted data of (b1) to (b3) and the set of keys from the Web server reconstructs the content based on received data from the application server and the Web server in Step S28.

That is, the client combines the following received data:
(1) Encrypted data by the common key (Kt) other than blocks,
(2) Encrypted data by block keys (Kb) other than portions encrypted by the individual key (user key) corresponding to the user (sub-block data) and
(3) sub-block data including encrypted data by the individual key (user key) corresponding to the user
   to reconstruct a series of content, and the client stores the content with key data received from respective servers, that is,
(4) common key (Kt), block key (Kb) and user key (Ku). The client executes decryption processing using respective encryption keys to thereby reproduce the content.

At the time of executing decryption of the content, the decryption processing is performed by appropriately switching the encryption key to be applied with reference to content configuration information in which area information necessary for selecting the key applied for decryption such as encrypted areas by the common key, block areas and individually-encrypted portions is recorded.

The example of content delivery processing using two servers has been explained in the above embodiment, however, the content delivery processing can be executed in one apparatus (unit) such as one server as well as executed as distributed processing by two or more plural apparatuses (units).

### [6. Content Reproduction Processing in Client]

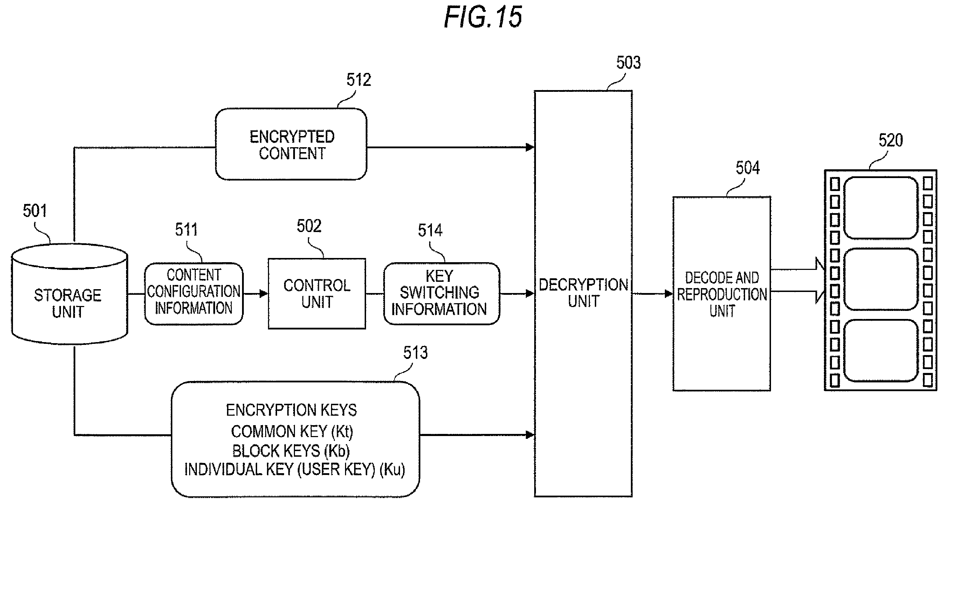

Next, an example of content reproduction processing in the client will be explained with reference to Fig. 15. In Fig. 15, a configuration of a data processing unit executing the content reproduction processing in the client and a storage unit are shown.

The content providing sequences in accordance with two different sequences have been explained with reference to Fig. 9 and Fig. 14. However, the client receives the following data from the server in both processing.
(1) Encrypted data by the common key (Kt) other than blocks,
(2) Encrypted data by block keys (Kb) other than portions encrypted by the individual key (user key) corresponding to the user (sub-block data)
(3) sub-block data including encrypted data by the individual key (user key) corresponding to the user
   The client combines the above data to reconstruct a series of content and stores the content with key data received from respective servers, that is,
(4) common key (Kt), block keys (Kb) and user key (Ku) and
(5) content configuration information
in a storage unit 501 shown in Fig. 15 and executes decryption and reproduction processing of the content based on data stored in the storage unit 501.

A control unit 502 of the data processing unit of the client acquires a content configuration information 511 from the storage unit 501. This is the information indicating an encrypted-data configuration including positional information such as block areas, individually-encrypted portions in blocks and the like in the content provided to the client. That is, the information necessary for confirming the following respective areas to select keys applied for decryption.
Encrypted areas by the common key (Kt)
Encrypted areas by respective block keys (Kb)
Encrypted areas encrypted by the individual key (user key Ku)

As shown in Fig. 15, the control unit 502 of the client reads the content configuration information 511 from the storage unit 501 and outputting a key switching information 514 to an encryption unit 503 with reference to the content configuration information 511.

That is, the control unit 502 outputs an instruction of applying the common key to the decryption unit 503 when performing processing of encrypted areas by the common key (Kt), an instruction of applying block keys corresponding to blocks to be decrypted to the decryption unit 503 when performing processing of encrypted areas by respective block keys (Kb) and an instruction of applying the individual key to the decryption unit 503 when performing processing of data areas encrypted by the individual key (user key (Ku)).

The decryption unit 503 executes decryption processing with respect to an encrypted content 512 read from the storage unit 501 by appropriately switching keys by applying the encryption keys (the common key, the block keys and the individual key) 513 read from the storage unit 501.

The decrypted result is provided to a decode and reproduction processing unit 504. The decode and reproduction processing unit 504 executes reproduction processing by executing given decode processing, for example, MPEG decoding to output a reproduction data 520.

### [7. Content Generating and Providing Processing Sequences in Server]

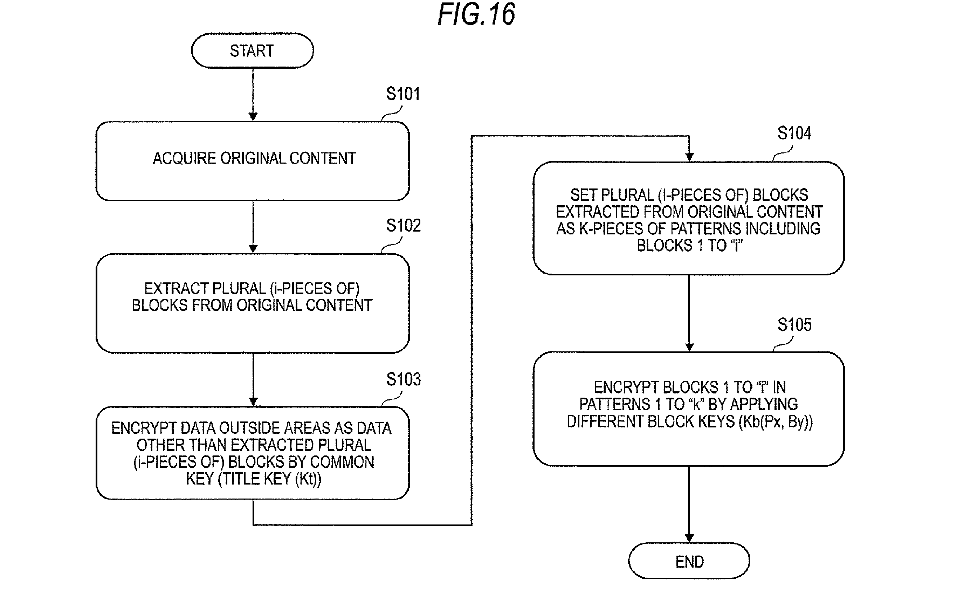

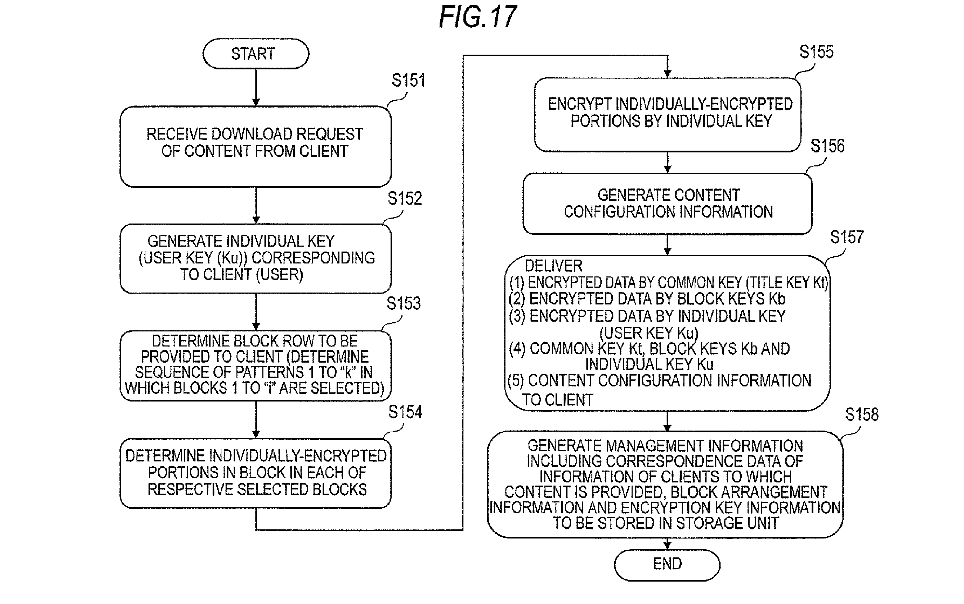

Next, generating and providing processing sequences of a content executed by the server such as a service provider will be explained with reference to flowcharts shown in Fig. 16 and Fig. 17.

### (7-1. Content Generating Processing Sequence in Server)

First, a content generating processing sequence executed in the server such as a service provider will be explained with reference to a flowchart of Fig. 16.

The processing performed in accordance with the flow of Fig. 16 is executed in the data processing unit of the server.

First, in Step S101, for example, an original content such as a movie is acquired. Next, plural (i-pieces of) blocks are set in the original content and extracted in Step S102.

Furthermore, in Step S103, data of areas other than the extracted blocks is encrypted by applying the common key (title key Kt).

Next, in Step S104, the plural (i-pieces of) blocks extracted from the original content are set as k-pieces of patterns including blocks 1 to i.

Furthermore, the blocks 1 to i in the patterns 1 to k are encrypted by applying different block keys (Kb (Px, By)) in Step S105.

Data of (b) and (c) explained with reference to Fig. 5 is generated by the above processing.

### (7-2. Content Providing Processing Sequence in Server)

Next, a content providing processing sequence executed in the server such as a service provider will be explained with reference to a flowchart of Fig. 17.

As explained with reference to the sequence diagram of Fig. 9 and the sequence diagram of Fig. 15, the content providing processing to the client can be executed by one server as well as executed by plural servers.

Therefore, the processing shown in the flow of Fig. 17 can be executed by one server or plural servers.

The processing performed in accordance with the flow of Fig. 17 is sequentially executed by the data processing unit of the server in each content delivery processing to the client.

First, in Step S151, a download request of the content from the client is received.

Next, in Step S152, the individual key (user key Ku) corresponding to the client (user) is generated. The key is generated by, for example, random number generation processing.

Next, in Step S153, a block row to be provided to the client is determined. That is, a sequence of patterns 1 to k in which blocks 1 to i are selected is determined.

For example, the following sequence (block arrangement information) is determined.
Block 1: Pattern 2
Block 2: Pattern 1
Block 3: Pattern k
Block i: Pattern 5

The pattern sequence (2, 1, k, ..., 5) (=block arrangement information) indicating from which pattern blocks 1 to i are selected is determined.

Next, in Step S154, individually-encrypted portions in the block are determined in each of respective selected blocks. That is, portions (individually-encrypted portions) encrypted by the individual key (user key: Ku) in respective blocks are determined.

The processing of determining the individually-encrypted portions in the selected blocks are performed so as to include important scenes and data areas in respective blocks in accordance with parameters explained, for example, with reference to Fig. 8. The individually-encrypted portions are determined in each sub-block which is set as a unit of re-dividing each block.

Next, in Step S155, the individually-encrypted portions by the individual key (user key: Ku) are encrypted.

As the encryption processing conditions of the individually-encrypted portions by the individual key (user key: Ku), data can be encrypted only by the user key Ku as well as data can be doubly encrypted by the block key Kb and the user key Ku.

Next, in Step S156, content configuration information is generated. The content configuration information includes information necessary for selecting keys to be applied when performing decryption of the content.

That is, the content configuration information includes information capable of identifying areas to which the following respective keys are applied.
Areas to which the common key (title key Kt) is applied
Areas to which respective block keys (Kb (Px, By)) are applied
Areas to which the individual key (user key Ku) is applied

Next, in Step S157, the server delivers data to the client. That is, the server provides the client with the following data.
(1) Encrypted data by the common key (title key Kt)
(2) Encrypted data by the block keys Kb
(3) Encrypted data by the individual key (user key Ku)
(4) Common key Kt, Block keys Kb and Individual key Ku
(5) Content configuration information

Furthermore, in Step S158, the server generates management information including correspondence data of information of clients to which the content is provided, block arrangement information (pattern sequence) and the encryption key information.

The management information generated in Step S158 is management information explained, for example, with reference to Fig. 6.

In the management information, client information such as delivery destination information and deliver user information, block information and encryption key information are recorded by being associated with one another.

### [8. Content Reproduction Sequence in Client]

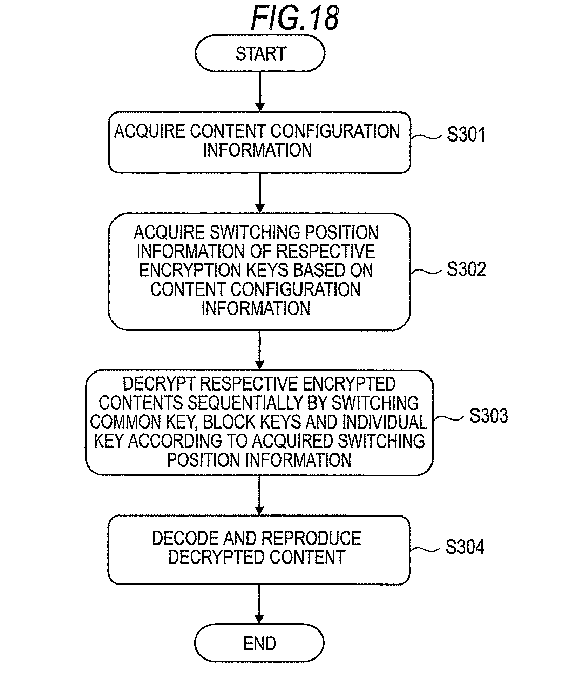

Next, a content reproduction processing sequence by the client will be explained with reference to a flowchart shown in Fig. 18. The processing is executed as processing of the data processing unit performing reproduction processing in the client apparatus.

First, the client apparatus executing the content reproduction processing acquires content configuration information received from the server in Step S301. That is, the content configuration information in which information capable of identifying the following application areas of respective keys is recorded.
Application areas of the common key (title key Kt)
Application areas of respective block keys (Kb (Px, By))
Application areas of the individual key (user key Ku)

Next, in Step S302, switching position information of respective encryption keys are acquired based on the content configuration information.

Next, in Step S303, respective encrypted contents are sequentially decrypted by switching the common key, the block keys and the individual key according to the acquired switching position information.

That is, decryption processing applying the common key (title key Kt) is performed with respect to the data area encrypted by the common key, decryption processing applying the block keys Kb (Px, By) is performed with respect to the data area encrypted by the block keys and decryption processing applying the individual key (user key Ku) is performed with respect to data area encrypted by the individual key (user key Ku).

In the content configuration information, information indicating by which block keys respective blocks of encrypted areas are encrypted is written.

The client determines by which block keys respective blocks of encrypted areas are encrypted by referring to the content configuration information to execute decryption processing by switching the block key.

Next, in Step S304, reproduction processing is performed by executing decode processing, for example, MPEG decoding processing on the decrypted content.

### [9. Source Determination Processing Sequence Based on Illegally-Distributed Content in Server]

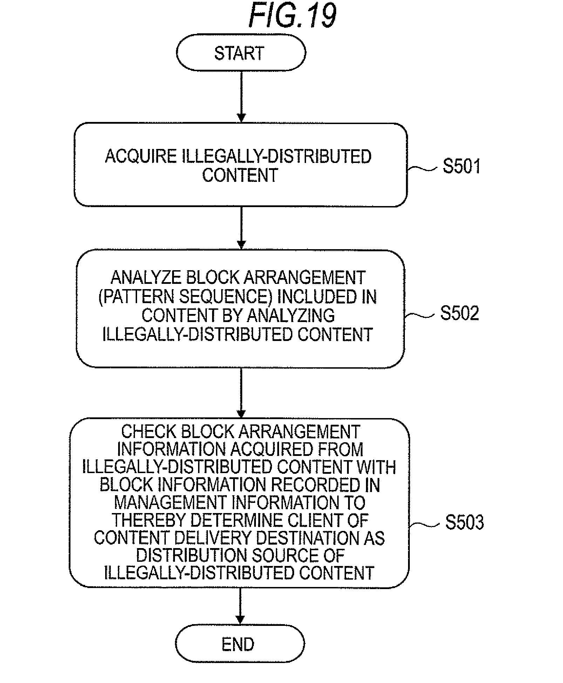

Next, a source determination processing sequence executed when an illegally-distributed content is found will be explained with reference to a flowchart of Fig. 19.

The processing in accordance with the flow shown in Fig. 19 is executed, for example, in the data processing unit of the server as the service provider which has executed the delivery of the content.

First, in Step S501, an illegally-distributed content is acquired.

As illegally-distributed contents, for example, contents which can be downloaded freely from a site which can be accessed by anyone on a network, copied contents recorded in discs distributed illegally can be cited.

Next, in Step S502, block arrangement (pattern sequence) included in the content is analyzed by analyzing the illegally-distributed content.

Next, in Step S503, the block arrangement information acquired from the illegally-distributed content is checked with the block information recorded in the management information to thereby determine a client of a content delivery destination as a distribution source of the illegally-distributed content.

The management information indicates management information shown in Fig. 10 which has been described above.

Only the example of analyzing processing of block arrangement has been explained in the flow of Fig. 19, however, the encryption keys to be provided to the client includes a set of the individual key (user key Ku) unique to the client and block keys corresponding to block arrangement unique to the client, and when these keys are illegally distributed, a source of illegally-distributed keys can be also found out by checking the illegally-distributed keys with registration information of management information shown in Fig. 10.

### [10. Hardware Configuration Examples of Respective Apparatuses]

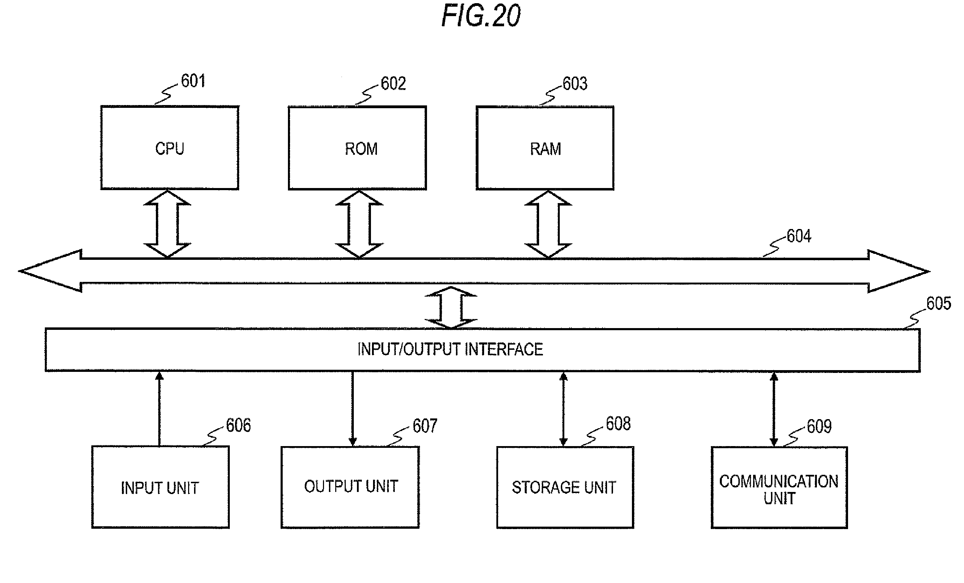

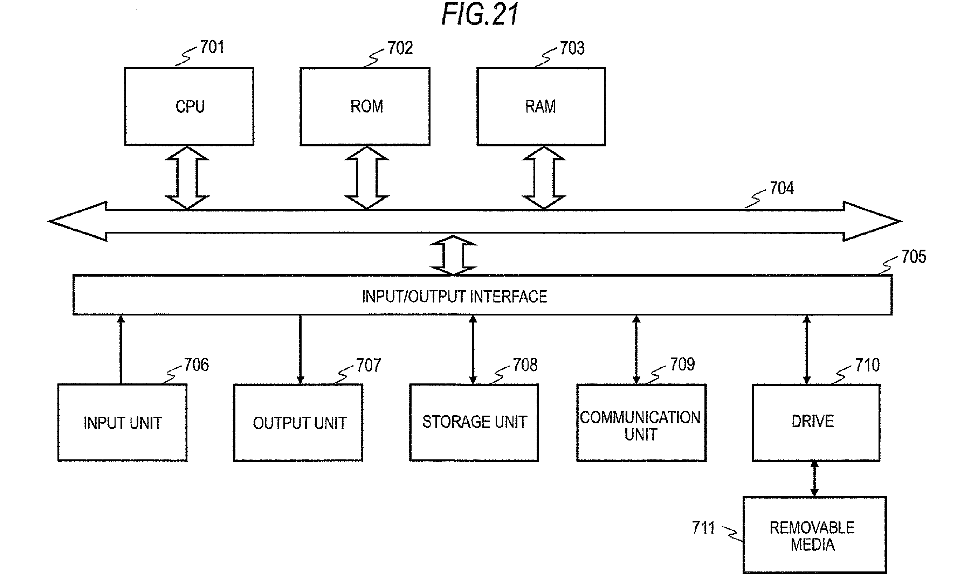

Lastly, hardware configuration examples of respective apparatuses executing the above processing will be explained with reference to Fig. 20 and Fig. 21.

First, a hardware configuration example of a server executing content providing processing will be explained with reference to Fig. 20.

A CPU (Central Processing Unit) 601 functions as a data processing unit executing various processing in accordance with programs stored in a ROM (Read Only Memory) 602 or a storage unit 608.

For example, the CPU 601 executes generation processing of encrypted contents, providing processing of contents, generation/recording processing of management information and so on explained in the above respective specific examples. A RAM (Random Access Memory) 603 appropriately stores programs executed by the CPU 601, data and so on. The CPU 601, the ROM 602 and the RAM 603 are connected to one another by a bus 604.

The CPU 601 is connected to an input/output interface 605 through a bus 604. An input unit 606 including various switches, a keyboard, a mouse, a microphone and so on and an output unit 607 including a display, a speaker and so on are connected to the input/output interface 605. The CPU 601 executes various processing in response to instructions inputted from the input unit 606 and outputs the processing result to, for example, the output unit 607.

The storage unit 608 connected to the input/output interface 605 includes, for example, a hard disk and so on, storing programs executed by the CPU 601 and various types of data. For example, management information explained with reference to Fig. 6 and so on are recorded.

A communication unit 609 performs communication with external apparatuses through networks such as Internet and local area networks.

Next, a hardware configuration example of a client apparatus executing receiving/reproduction processing of contents and so on will be explained with reference to Fig. 22.

A CPU (Central Processing Unit) 701 functions as a data processing unit executing various processing in accordance with programs stored in a ROM (Read Only Memory) 702 or a storage unit 708.

For example, the CPU 701 performs communication processing with respect to the server, recording processing of received data from the server with respect to the storage unit 708 (hard disk and the like), reproduction processing of data from the storage unit 708 (hard disk and the like) explained in the above respective specific examples.

A RAM (Random Access Memory) 703 appropriately stores programs executed by the CPU 701, data and so on. The CPU 701, the ROM 702 and the RAM 703 are connected to one another by a bus 704.

The CPU 701 is connected to an input/output interface 705 through a bus 704. An input unit 706 including various switches, a keyboard, a mouse, a microphone and so on and an output unit 707 including a display, a speaker and so on are connected to the input/output interface 705. The CPU 701 executes various processing in response to instructions inputted from the input unit 706 and outputs the processing result to, for example, the output unit 707.

The storage unit 708 connected to the input/output interface 705 includes, for example, a hard disk and so on, storing programs executed by the CPU 701 and various types of data. A communication unit 709 performs communication with external apparatuses through networks such as Internet and local area networks.

A drive 710 connected to the input/output interface 705 drives removable media 711 such as a magnetic disc, an optical disc, a magneto-optical disc or a semiconductor memory, acquiring various data such as recorded contents and programs.

The present disclosure has been described with reference to specific examples. However, it is obvious that modifications or alternations can be done by those skilled in the art within the scope not departing from the gist of the present disclosure. That is, the present disclosure has been disclosed in a form of exemplification and should not be interpreted in a limited manner. In order to determine the gist of the present disclosure, the appended claims should be taken into consideration.

A series of processing explained in the present specification can be performed by hardware as well as software or combined configuration of both. When processing by software is executed, it is possible to install a program which record the processing sequences into a memory of a computer incorporated into dedicated hardware to execute the processing, or it is possible to install the program into a general-purpose computer which can perform various processing to execute the processing. For example, the program can be recorded in recording media in advance. In addition to installation to the computer from recording media, it is possible to install the program into recording media such as an internal hard disk by receiving the program through networks such as LAN (Local Area Network) and Internet.

Various processing described in the specification can be executed not only in time series along the description but also in parallel or individually according to processing ability of an apparatus executing processing or according to need. The system means a logical aggregation of plural apparatuses and it is not limited to a configuration in which respective apparatuses are in the same casing.

As described above, according to the embodiment of the present disclosure, a configuration capable of preventing complete reproduction of a content can be realized even when the encryption key of the encrypted content is leaked.

Specifically, the patterns 1 to k in which blocks 1 to i as configuration data of the content are encrypted by different block keys are set, and contents having block arrangement (pattern sequence) including different blocks 1 to i are provided to the clients by selecting blocks at random in each content delivery. The block arrangement of contents to be provided to the clients is registered as management information. It is difficult to reproduce the content completely even if the common key (title key) used as the encryption key for part of the content is leaked. It is also possible to identify the client as a source of an illegally-distributed content by acquiring block arrangement from the illegally-distributed content and checking the arrangement with registered information in the management information.

The present disclosure contains subject matter related to that disclosed in Japanese Priority Patent Application JP 2011-027300 filed in the Japan Patent Office on February 10, 2011.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

### CLAUSES

Advantageous features and/or embodiments can be generally described by the following numbered paragraphs.
1. An information processing method executed by an information processing apparatus performing content reproduction processing, comprising:
   determining
   encrypted areas by a common key,
   encrypted areas by block keys and
   encrypted areas by an individual key corresponding to a user by referring to content configuration information as encryption configuration information of the content; and
   performing decryption processing by switching the common key, the block keys and the individual key to execute reproduction of the content.
2. A program allowing an information processing apparatus generating contents to be provided to a client to execute information processing of:
   extracting plural blocks (blocks 1 to i) as content configuration data from an original content,
   setting patterns 1 to k as plural patterns including block rows of the extracted blocks 1 to i,
   generating encrypted blocks applying block keys Kb (Px, By) which are different according to respective patterns and respective blocks, in which Px indicates k-pieces of pattern identifiers (P1 to Pk) and By indicates i-pieces of block identifiers (B1 to Bi),
   selecting encrypted blocks 1 to i from the patterns 1 to k at random in each content delivery,
   generating individually-encrypted portions by encrypting part of configuration data of selected blocks by applying an individual key (user key Ku) corresponding to a client as a content delivery destination, and
   generating an encrypted content including encrypted blocks on which encryption processing by the block keys Kb (Px, By) is performed and individually-encrypted portions on which encryption processing by the individual key (user key Ku) is performed as the content to be provided to the client by the information processing apparatus.
3. A program allowing an information processing apparatus performing content reproduction processing to execute information processing of:
   determining
   encrypted areas by a common key,
   encrypted areas by block keys and
   encrypted areas by an individual key corresponding to a user by referring to content configuration information as encryption configuration information of the content, and
      performing decryption processing by switching the common key,
   the block keys and the individual key to execute reproduction of the content.

## Claims

1. An information processing apparatus comprising:
a data processing unit configured to generate contents to be provided to a client,
wherein the data processing unit
extracts plural blocks (blocks 1 to i) as content configuration data from an original content,
sets patterns 1 to k as plural patterns including block rows of the extracted blocks 1 to i,
generates encrypted blocks applying block keys Kb (Px, By) which are different according to respective patterns and respective blocks, in which Px indicates k-pieces of pattern identifiers (P1 to Pk) and By indicates i-pieces of block identifiers (B1 to Bi),
selects encrypted blocks 1 to i from the patterns 1 to k at random in each content delivery,
generates individually-encrypted portions by encrypting part of configuration data of the selected blocks by applying an individual key (user key Ku) corresponding to a client as a content delivery destination, and
generates an encrypted content including encrypted blocks on which encryption processing by the block keys Kb (Px, By) is performed and individually-encrypted portions on which encryption processing by the individual key (user key Ku) is performed as the content to be provided to the client.

2. The information processing apparatus according to claim 1,
wherein the data processing unit performs processing of transmitting
the encrypted blocks on which encryption processing by the block keys Kb (Px, By) is performed,
the individually-encrypted portions on which encryption processing by the individual key (user key Ku) is performed, and
the block keys Kb (Px, By) and the individual key (user key Ku) applied to decryption processing of the encrypted blocks to the client.

3. The information processing apparatus according to claim 1,
wherein the data processing unit generates management information in which client identification information for identifying a client as providing destinations is associated with block arrangement information of contents to be provided and stores the management information in a storage unit.

4. The information processing apparatus according to claim 3,
wherein the data processing unit further generates management information in which the client identification information is associated with encryption key information provided to the client and stores the management information in the storage unit.

5. The information processing apparatus according to claim 3,
wherein the data processing unit executes analyzing processing of block arrangement included in a distributed content to identify the client as the content delivery destination by performing checking processing between the analyzed block arrangement information and registration information of the management information.

6. The information processing apparatus according to claim 4,
wherein the data processing unit identifies the client as the delivery destination of the block keys or the individual key by performing checking processing between key information of at least either of the distributed block keys or the individual key and registration information of the management information.

7. The information processing apparatus according to claim 1,
wherein the data processing unit performs setting of the individually-encrypted portions in units of sub-blocks obtained by further dividing the block.

8. The information processing apparatus according to claim 1,
wherein the data processing unit encrypts data outside block areas other than the plural blocks extracted from the original content by applying a common key common to plural clients to which the content is delivered, and generates data outside block areas on which encryption by the common key is performed as the content provided to the clients.

9. The information processing apparatus according to claim 8,
wherein the common key is a title key Kt corresponding to a title of the content.

10. The information processing apparatus according to claim 1,
wherein the data processing unit generates content configuration information including encryption configuration information of the content as data to be provided to a clients.

11. A content delivery system comprising:
a content providing unit executing content providing processing with respect to a client; and
the client receiving contents from the content providing unit,
wherein contents to be provided to the client includes plural blocks and data outside block areas,
a configuration unit A of the content providing unit stores
(1) common-key encrypted data obtained by encrypting data outside block areas by the common key (Kt) and
(2) encrypted block data obtained by encrypting block data by block keys (Kb) respectively different from one another in the storage unit
a configuration unit B of the content providing unit stores
(3) clear-text data of block data in the storage unit,
the configuration unit B of the content providing unit
generates the individual key (user key) corresponding to the client,
selects block data to be provided to the client,
encrypts part of configuration data of the selected blocks by the individual key (user key) corresponding to the client to be provided to the client, and
provides the client with data identification information for identifying content configuration data other than encrypted data by the individual key (user key) in accordance with a request of the content from the client, and
the configuration unit A of the content providing unit
receives the data identification information from the client and provides the client with data specified by the received data identification information.

12. The content delivery system according to claim 11,
wherein the data identification information for identifying the content configuration data is URL (Uniform Resource Locator).

13. An information processing apparatus comprising:
a data processing unit configured to perform content reproduction processing,
wherein the data processing unit determines
encrypted areas by a common key,
encrypted areas by block keys and
encrypted areas by an individual key corresponding to a user by referring to content configuration information as encryption configuration information of the content, and performs decryption processing by switching the common key, the block keys and the individual key to execute reproduction of the content.

14. The information processing apparatus according to claim 13,
wherein the encrypted areas by block keys includes plural block areas respectively encrypted by different block keys, and
the data processing unit determines by which block keys respective blocks of encrypted areas are encrypted and executes decryption processing by switching block keys by referring to the content configuration information.

15. An information processing method executed by an information processing apparatus generating contents to be provided to a client, comprising:
extracting plural blocks (blocks 1 to i) as content configuration data from an original content;
setting patterns 1 to k as plural patterns including block rows of the extracted blocks 1 to i;
generating encrypted blocks applying block keys Kb (Px, By) which are different according to respective patterns and respective blocks, in which Px indicates k-pieces of pattern identifiers (P1 to Pk) and By indicates i-pieces of block identifiers (B1 to Bi);
selecting encrypted blocks 1 to i from the patterns 1 to k at random in each content delivery;
generating individually-encrypted portions by encrypting part of configuration data of selected blocks by applying an individual key (user key Ku) corresponding to a client as a content delivery destination; and
generating an encrypted content including encrypted blocks on which encryption processing by the block keys Kb (Px, By) is performed and individually-encrypted portions on which encryption processing by the individual key (user key Ku) is performed as the content to be provided to the client by the information processing apparatus.
